# FASCICULE DE BREVET EUROPEEN

(11) **EP 3 299 650 B1**
(45) Date de publication et mention de la délivrance du brevet: **03.07.2019**
(21) Numéro de dépôt: 17190773.6
(22) Date de dépôt: 13.09.2017
(51) Int. Cl.: F16C 35/073, F16C 25/06, B64C 25/36, B60B 27/02, F16C 19/54, F16C 19/36

(54) **PROCÉDÉ POUR ÉQUIPER L'EXTRÉMITÉ D'UN TUBE FIN D'UNE BUTÉE RÉGLABLE PAR VISSAGE**
VERFAHREN ZUM AUSSTATTEN EINES ENDES EINES DÜNNWANDIGEN ROHRES MIT EINEM MITTELS EINER VERSCHRAUBUNG EINSTELLBAREN AXIALANSCHLAG
A METHOD FOR EQUIPING THE END OF A THIN WALLED TUBE WITH AN AXIAL STOP THAT IS ADJUSTABLE BY A THREADED JOINT

(30) Priorité: 26.09.2016 FR 1659005
(43) Date de publication de la demande: 28.03.2018
(73) Titulaire: Safran Landing Systems, 78140 Vélizy-Villacoublay (FR)
(72) Inventeur: BELLENGER, Vincent, 78140 VELIZY VILLACOUBLAY (FR)
(74) Mandataire: Lavialle, Bruno François Stéphane

(56) Documents cités:
- DE-A1-102007 059 587
- GB-A- 191 006 988
- US-A- 665 569
- US-A- 5 328 275
- US-A- 6 003 641
- US-A1- 2016 031 259

## Description

### ARRIERE PLAN DE L'INVENTION

Dans le domaine des atterrisseurs d'aéronef, les roues sont généralement équipées de roulements à rouleaux coniques qui sont engagés sur un essieu de l'atterrisseur et préchargés par un écrou d'extrémité d'essieu qui vient porter contre l'un des roulements, l'autre roulement venant en appui contre une butée de l'essieu. Les roulements ne sont généralement pas montés directement sur l'essieu mais une chemise est interposée entre l'essieu et les roulements pour notamment protéger l'essieu des flux de chaleur dégagés par les disques de freins logés dans la roue. Cette chemise est couramment dénommée protecteur d'essieu.

Dernièrement, il a été envisagé la possibilité de précharger les roulements directement sur le protecteur d'essieu qui serait pourvu pour la circonstance d'une butée à l'une de ses extrémités et d'un écrou de préchargement à l'autre de ses extrémités, l'ensemble étant alors enfilé tel quel sur l'essieu et immobilisé axialement à l'aide de l'écrou d'essieu.

Des exemples de roulements à rouleaux coniques montés sur un essieu de roue par interposition d'un tube de faible épaisseur et préchargés directement sur ce tube par vissage sont connus des documents US 5 328 275 A, US 2016 031 259 A1 et US 6 003 641 A. Les deux derniers documents concernent des roues d'atterrisseurs d'aéronef.

Cependant, le protecteur d'essieu en question se présente sous la forme d'un tube de faible épaisseur, et le passage des roulements impose que le sommet des filets ne dépasse pas de la portée sur laquelle vient reposer le roulement le plus proche du filetage, ce qui laisse très peu d'épaisseur pour la réalisation du filetage. La réalisation d'un tel filetage à l'extrémité d'un tube aussi fin est donc difficilement envisageable notamment pour des raisons de résistance à la fatigue.

### OBJET DE L'INVENTION

L'invention vise à proposer un procédé pour équiper un tube fin d'une butée d'extrémité réglable par vissage, mais sans avoir à fileter le tube lui-même.

### RESUME DE L'INVENTION

En vue de la réalisation de ce but, le procédé de l'invention comporte les étapes de :
- enfiler sur l'extrémité du tube une virole filetée sur sa surface externe et qui est immobilisée sur l'extrémité du tube au moyen d'une pluralité de pions engagés dans des orifices en regard de la virole et du tube ;
- visser sur la virole un écrou ayant une première face d'extrémité servant de butée pour précharger tout élément monté sur le tube avant la virole, et une deuxième face d'extrémité opposée comportant des formes aptes à son entraînement en rotation par un outil, l'écrou recouvrant les pions en service.

Ainsi, les éléments tels que les roulements de roues peuvent être enfilés sur le tube sans qu'aucun obstacle ne gêne leur progression. Une fois en place contre l'extrémité formant butée du tube, on rapporte la virole puis l'écrou. Celui-ci est vissé grâce à un outil coopérant avec la deuxième face de l'écrou tournée vers l'opérateur. On remarquera que la première face doit nécessairement dépasser la virole pour venir au contact des roulements, de sorte que l'écrou recouvre les pions et les empêche donc de quitter les orifices dans lesquels ils sont engagés. La virole peut être prévue suffisamment épaisse pour pouvoir recevoir un filetage sur sa face externe sans risque de rupture en fatigue. Cette solution est très compacte diamétralement et peut donc être utilisée dans des environnements avec des contraintes d'encombrement élevées.

Selon un mode particulier de mise en oeuvre, le procédé comporte l'étape de bloquer en rotation l'écrou sur la virole en rapportant sur la deuxième face de l'écrou une fois celui-ci en place une bague comportant au moins un doigt à engager dans un créneau ménagé sur une extrémité de la virole. La bague sera fixée sur l'écrou par tout moyen, notamment des vis.

### BREVE DESCRIPTION DES DESSINS

L'invention sera mieux comprise à la lumière de la description qui suit d'un mode de mise en oeuvre de l'invention en référence aux figures des dessins annexés parmi lesquelles :
- la figure 1 est une vue en coupe partielle du bas d'un atterrisseur d'aéronef, montrant un essieu sur lequel on vient monter une roue, avec interposition d'un protecteur d'essieu équipé selon l'invention d'une butée réglable ;

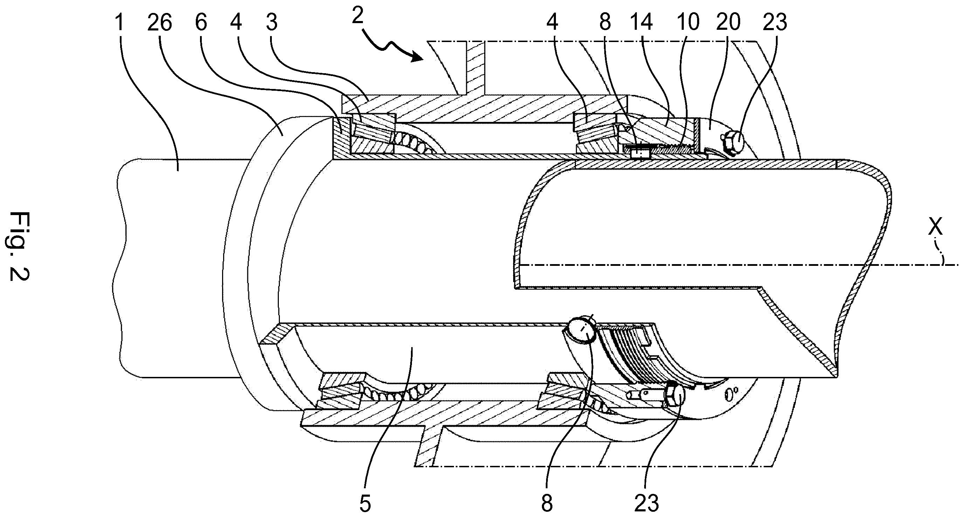

- la figure 2 est une vue analogue à celle de la figure 1, montrant le montage terminé.

### DESCRIPTION DETAILLEE DE L'INVENTION

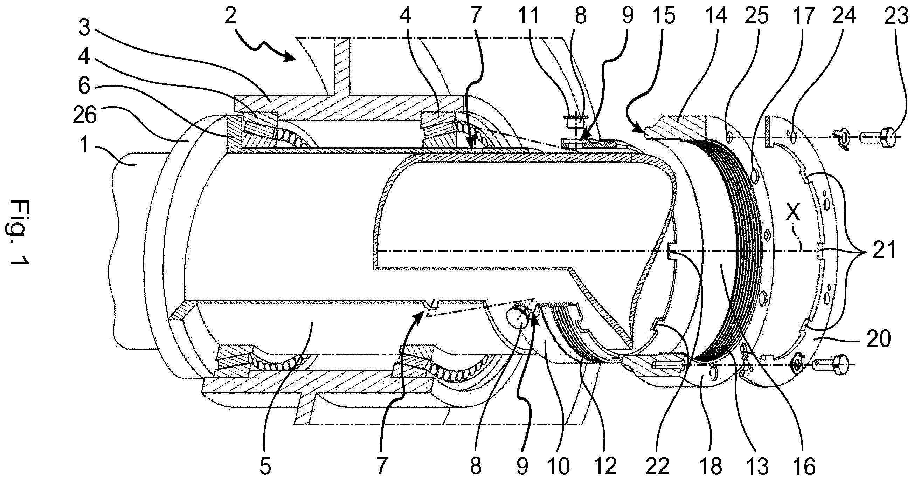

L'invention est ici détaillée en référence aux figures illustrant l'application du procédé de l'invention au montage d'une roue sur un essieu d'atterrisseur d'aéronef, mais elle peut être utilisée pour d'autres applications. On vient ici rapporter sur un essieu 1 une roue 2 dont on voit le moyeu 3 qui porte deux roulements à rouleaux coniques 4. Les roulements sont enfilés sur l'essieu 1 pour tourner autour d'un axe de rotation X avec interposition d'un protecteur d'essieu 5 qui se présente sous la forme d'un tube fin muni à son extrémité d'une butée fixe 6 sur laquelle vient buter l'un des roulements 4 de la roue. L'autre extrémité du protecteur d'essieu comporte des orifices 7 traversants qui s'étendent selon une circonférence (deux orifices partiellement coupés sont visibles sur la figure 1).
Les orifices 7 sont destinés à recevoir des pions 8 qui sont engagés dans des orifices 9 d'une virole 10 qui est enfilée sur l'extrémité du protecteur d'essieu 5. Bien entendu, les orifices 9 de la virole 10 viennent en regard des orifices 7 du protecteur d'essieu 5. Les pions 8 arrêtent la virole 9 sur le protecteur d'essieu en rotation et axialement. Ici, les pions 8 ont une tête 11 qui vient se loger dans un lamage des orifices 9. La virole 10 comporte sur sa face externe un filetage 12 destiné à coopérer avec un taraudage 13 d'un écrou 14. L'écrou 14 comporte une face d'extrémité 15 (ou face de butée) qui vient en appui contre le roulement 4 en regard et qui forme donc une butée réglable, permettant de régler la précharge des roulements 4 entre la butée fixe 6 et l'écrou 14. La face d'extrémité 15 s'étend à l'extrémité d'une jupe 16 de l'écrou 14 qui recouvre les pions 8 de sorte que ceux-ci ne peuvent sortir de leurs logements, ni par l'extérieur en raison de la présence de l'écrou 14, ni vers l'intérieur à cause de leurs têtes 11. L'écrou 14 est manoeuvré à l'aide d'un outil (non représenté) comportant des doigts s'engageant dans des empreintes 17 qui sont ménagées sur une face d'extrémité 18 (ou face de manoeuvre) tournée vers l'opérateur. Pour bloquer l'écrou 14, on utilise une rondelle d'arrêt 20 que l'on vient plaquer contre la face de manoeuvre 18. La rondelle 20 comporte des ergots 21 qui viennent s'engager dans des créneaux 22 ménagés dans l'extrémité du protecteur d'essieu 5. Puis la rondelle 20 est solidarisée à l'écrou 14 au moyen de vis 23 qui sont engagées dans des orifices 24 de la rondelle d'arrêt 20 et qui sont vissées dans des taraudages 25 pratiqués sur la face de manoeuvre 18 selon des axes parallèles à l'axe de rotation X. Bien entendu, il convient que l'écrou 14 soit serré suffisamment pour faire venir en regard les orifices 24 de la rondelle 20 avec les taraudages 25 de l'écrou 14.

L'arrêt axial de l'ensemble sur l'essieu 1 est réalisé au moyen d'une part d'une butée fixe 26 de l'essieu sur laquelle vient s'appuyer l'extrémité en forme de butée fixe 6 du protecteur d'essieu 5, et d'autre part par un écrou d'essieu (non représenté) vissée sur une extrémité filetée de l'essieu pour bloquer le protecteur axialement sur l'essieu.

Le procédé de l'invention comporte plusieurs avantages. Il permet l'adaptation d'une butée réglable par vissage, tout en laissant libre le passage des roulements sur le tube fin. Le filetage est réalisé sur la virole qui est rapportée après que les éléments à serrer (ici les roulements) soient passés, et il est possible de donner à la virole l'épaisseur nécessaire pour recevoir un filetage capable de résister notamment en fatigue aux cycles de charges vues par la roue et l'essieu. L'ensemble rapporté sur l'extrémité du tube fin (virole, écrou) est très compact radialement et est accessible axialement.

L'invention n'est pas limitée à ce qui vient d'être décrit mais englobe au contraire toute variante entrant dans le cadre défini par les revendications.

En particulier, les pions pourront être mis en place sur la virole avant que celle-ci ne soit enfilée sur l'essieu, en étant par exemple retenus sur la virole par un ligament élastique s'étendant autour de la virole. Le ligament élastique permet leur écartement lors de l'engagement de la virole sur le protecteur le tube fin, tout en empêchant les pions de tomber pendant la mise en place et en poussant automatiquement les pions dans les orifices du tube fin lorsqu'ils sont en regard.

## Revendications

1. Procédé pour adapter une butée réglable par vissage sur l'extrémité d'un tube fin (5), comportant les étapes de :
- enfiler sur l'extrémité du tube (5) une virole (10) filetée sur sa surface externe et qui est immobilisée sur l'extrémité du tube au moyen d'une pluralité de pions (8) engagés dans des orifices (7,9) en regard de la virole et du tube ;
- visser sur la virole un écrou (14) ayant une première face d'extrémité (15) servant de butée pour précharger tout élément (4,4) monté sur le tube avant la virole, et une deuxième face d'extrémité opposée (18) comportant des formes (25) aptes à son entraînement en rotation par un outil, l'écrou recouvrant les pions en service.

2. Procédé selon la revendication 1, dans lequel les pions comportent une tête (11) reçue dans un lamage de l'orifice (9) de la virole.

3. Procédé selon la revendication 1, dans lequel l'écrou est arrêté en rotation au moyen d'une rondelle d'arrêt (20) fixée sur la deuxième face (18) de l'écrou et comportant des ergots 21 venant s'engager dans des créneaux de l'extrémité du tube fin.

## Patentansprüche

1. Verfahren zum Anpassen eines Anschlags, der durch Verschraubung auf das Ende eines dünnwandigen Rohres (5) einstellbar ist, umfassend die Schritte:
- Schieben eines Ringes (10) auf das Ende des Rohres (5), wobei der Ring auf seiner Außenfläche mit einem Gewinde versehen und auf dem Ende des Rohres mittels einer Vielzahl von Stiften (8) blockiert ist, die in gegenüberliegenden Öffnungen (7, 9) des Rings und des Rohrs in Eingriff stehen;
- Schrauben einer Mutter (14) auf den Ring, wobei die Mutter (14) eine erste Endfläche (15) hat, die als Anschlag zum Vorspannen jedes Elements (4, 4) dient, das vor dem Ring auf dem Rohr montiert worden ist, sowie eine entgegengesetzte zweite Endfläche (18), die Formen (25) umfasst, die für ihren Drehantrieb mittels eines Werkzeugs geeignet sind, wobei die Mutter die Stifte im Betrieb abdeckt.

2. Verfahren nach Anspruch 1, bei dem die Stifte einen Kopf (11) umfassen, der in einer Senkung der Öffnung (9) des Rings aufgenommen ist.

3. Verfahren nach Anspruch 1, bei dem die Mutter in Drehung mittels einer Sicherungsscheibe (20) gestoppt wird, die an der zweiten Fläche (18) der Mutter befestigt ist und Nasen (21) umfasst, die in Schlitze im Ende des dünnwandigen Rohres eingreifen.

## Claims

1. A method for adapting a stop that is adjustable by screwing onto the extremity of a fine tube, including the following stages:
- slipping onto the extremity of the tube a ferrule that is threaded on its external surface and is immobilized on the extremity of the tube by means of a plurality of pins engaged in orifices facing towards the ferrule and the tube;
- screwing onto the ferrule a nut having a first end face acting as a stop in order to preload any element mounted on the tube in front of the ferrule, and a second opposing end face containing forms adapted for it to be driven in rotation by a tool, the nut covering the pins in service.

2. The method according to claim 1, in which the pins include a head received in a recess in the orifice of the ferrule.

3. The method according to claim 1, in which the nut is prevented from rotating by means of a locking washer fixed on the second face of the nut and including pins engaging in slots in the extremity of the fine tube.
